# EUROPEAN PATENT APPLICATION

(11) **EP 0 616 757 A2**
(43) Date of publication of application: **28.09.1994**
(21) Application number: 94200275.9
(22) Date of filing: 11.12.1990
(51) Int. Cl.: A01B 49/06

(54) **A soil cultivating machine**

(30) Priority: 27.12.1989 NL 8903162
(62) Divisional of application: 90203244.0
(71) Applicant: C. van der Lely N.V., NL-3155 PD Maasland (NL)
(72) Inventor: van der Lely, Cornelis, CH-6300 Zug (CH)
(74) Representative: Mulder, Herman

(57) **Abstract**

The invention relates to a soil cultivating machine for the purpose of combined working and sowing of soil, comprising soil working elements (4) and a following packer roller constituted by a plurality of roller elements (33) arranged in side-by-side relationship for creating furrows in which the sowing can take place, by locally compressing the worked soil, the machine further comprising a seed drill (25) with seed delivery tubes (54), mounted on or at least supported by the packer roller during operation, a seed delivery tube (54) being arranged behind each roller element (33) for depositing seeds on the precompressed soil in a respective furrow. The machine comprises further pressure rollers (61), each operating at least predominantly in the line of a respective furrow and being arranged behind a seed delivery tube (54) and pivotably around a horizontal axis in the machine, by means of an arm (59) carrying said further pressure roller.

## Description

The present invention relates to a soil cultivating machine for the purpose of combined working and sowing of soil, comprising soil working elements and a following packer roller constituted by a plurality of roller elements arranged in side-by-side relationship for creating furrows in which the sowing can take place by locally compressing the worked soil, the machine further comprising a seed drill with seed delivery tubes, mounted on or at least supported by the packer roller during operation, a seed delivery tube being arranged behind each roller element for depositing seeds on the precompressed soil in a respective furrow.

A suchlike machine is known. It has the advantage that compaction, which facilitates capillary supply of moisture and support for emerging plants, does not occur between the rows. In this area weeds might otherwise emerge as favourably as the crop seeds deposited within the rows. Also, in such a machine, the crop seeds do not undergo the sometimes less favourable pressure exerted by the roller elements, as compared to alternative constructions wherein the crop seeds are deposited to the front of a roller. Alternatively, however, the machine has for disadvantage that the contact between deposited seed and the compacted soil, necessary for absorbing the supplied moisture, is less favourable as when the seed were deposited to the front of a roller element.

The present invention has for its object a construction overcoming the above-described disadvantages. According to the invention, this can be achieved when the machine comprises further pressure rollers, each operating at least predominantly in the line of a respective furrow and being arranged behind a seed delivery tube, and pivotably around a horizontal axis in the machine, by means of an arm carrying said further pressure roller. In this way it is made possible to exert only a relatively low pressure, enough for bringing the crop seeds in good contact with the compressed soil, however, due to the pivotable connection of the further pressure rollers in the machine, without the weight of the seed drill and the packer roller or any other machine part.

For a better understanding of the present invention and to show how the same may be carried into effect, reference will now be made, by way of example, to the accompanying drawings, in which:
Figure 1 is a schematic plan view of an implement in accordance with the invention;
Figure 2 is a view taken in the direction of the arrow II of Figure 1;
Figure 3 is, to an enlarged scale, a view taken on the line III - III in Figure 1;
Figure 4 is a view taken in the direction of the arrow IV in Figure 3, and
Figure 5 is a view taken in the direction of the arrow V in Figure 3.

The implement shown in the drawings comprises a soil cultivating machine 1, in particular one for preparing a seed bed. The machine includes a box-like frame portion 2 which extends transversely to the direction of operative travel A. Inside the frame portion 2 there are bearing-supported at equal interspaces of preferably 25 cms, the upwardly extending, preferably vertical, shafts 3 of soil working members 4. At the end of the shaft 3 projecting from the bottom side of the frame portion 2, each of the soil working members 4 includes a carrier 5, said carrier having near its ends downwardly extending soil working elements 6 in the form of tines. The ends of the box-like frame portion 2 are provided with upwardly extending plates 7 which are located at least substantially parallel to the direction of operative travel A.

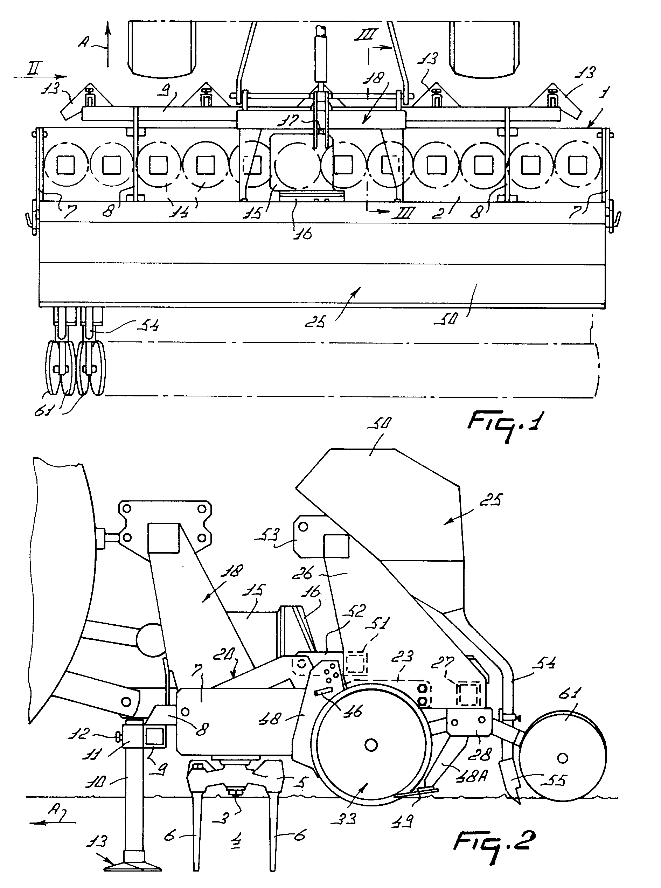

On the upper side of the frame portion 2, at some distance from its ends, there are arranged supports 8 which extend in the direction of operative travel A and, seen in plan view, extend to beyond the leading side thereof. To the supports 8 there is attached a beam 9 which extends parallel to the frame portion 2, to which beam 9 there are fitted by means of bushings 11 and clamping bolts 12 five downwardly extending, at least substantially vertical, carriers 10. The lower ends of the carriers 10 are provided with goosefoot-like soil working members 13 for working the subsoil. As is apparent from Figure 1, the soil working members 13 are distributed along the entire length of the beam 9. By means of the clamping bolts 12, the carriers 10 can be adjusted to a plurality of positions for setting the working depth of the goosefoot-like soil working members 13.

Inside the frame portion 2, a gear wheel 14 is mounted on each shaft 3 of a soil working member 4, the arrangement being such that the gear wheels 14 on the shafts of adjacent soil working members 4 are in driving connection with each other. Near the centre, the shaft 3 of a soil working member 4 is extended upwardly and reaches to into a gear box 15 arranged on the upper side of the frame portion 2. Inside the gear box 15, the extension is in driving connection with a shaft which extends in the direction of operative travel A and which via a speed variator 16 located at the rear side of the gear box is in driving connection with a superjacent shaft 17, which shaft 17 projects from the gear box 15 at the leading side and can be coupled to the power take-off shaft of a tractor via an intermediate shaft.

On the upper side of the frame portion 2 there is arranged a trestle 18 which encloses the gear box and at its leading side is provided with coupling means for coupling the machine to the three-point lifting hitch of a tractor.

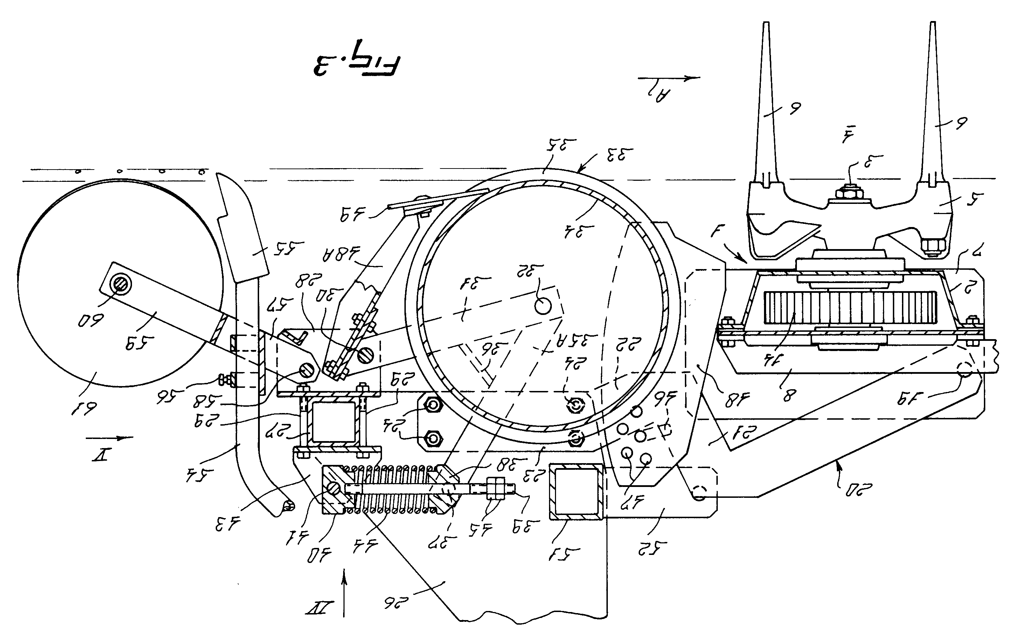

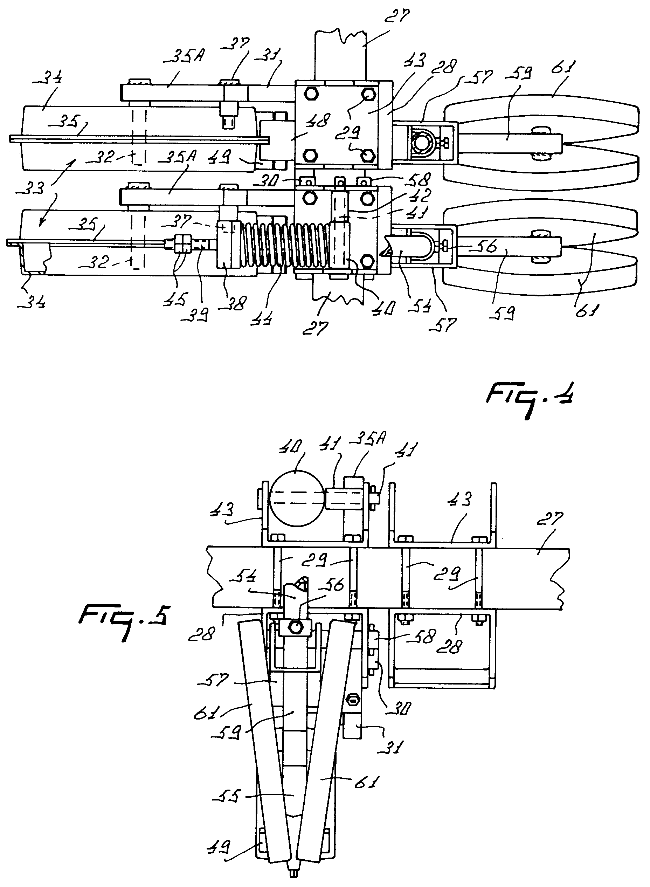

Near its leading side, each of the plates 7 is fitted with a shaft 19 which extends transversely to the direction of operative travel A, the arrangement being such that the longitudinal centre lines of the shafts 19 are in alignment. About each of the shafts 19 there is arranged pivotably an arm 20 which extends rearwardly along a plate 7, which arm 20, seen in plan view, is folded downwardly in a position just behind the box-like frame portion 2 through a portion 21. The portion 21 merges into a portion 22 which extends obliquely upwardly and rearwardly and in its turn merges into a rearwardly extending, at least substantially horizontal portion 23. A seed drill 25 is bolted to the horizontal portion 23 of the arms 20 by means of bolts 24. The seed drill 25 includes upwardly directed plates 26 which extend into the direction of operative travel A and by means of the bolts 24 are connected detachably to the portion 23 of the arms 20. The plates 26 are interconnected at the rear side by means of a cross-beam 27. The beam 27, which is located near the portion 23 of the arms 20, is provided at its lower side with U-shaped portions 28, the legs of which extend downwardly. As is apparent from Figures 4 and 5, the U-shaped portions 28 are located at a short distance from each other and are secured by means of bolts 29. Between the legs of each of the U-shaped portions 28 there is arranged pivotably by means of a horizontal transverse shaft 30 an arm 31 which extends obliquely downwardly and forwardly from a portion 28. The leading end of each arm 31 supports a roller element 33 by means of an at least substantially horizontal shaft 32 extending transversely to the direction of operative travel. Each roller element 33 consists of two portions 34 which are each other's mirror image and are interconnected near the centre thereof, thereby forming an outwardly extending edge 35. The shaft 32 is furthermore supported by an arm 35A which extends obliquely upwardly and rearwardly from the shaft 32 and is connected to the arm 31 by means of a supporting strip 36 (Figure 3). The upper end of the arm 35A is connected pivotably via a shaft 37 to a block 38 which is slidable along a rod 39. The one end of the rod 39 is arranged pivotably by means of a block 40, a shaft 41 and an adapter bushing 42 between the upwardly directed legs of U-shaped portions 43 which are bolted to the upper side of the beam 27 by means of the bolts 29. A pressure spring 44 is provided around the rod 39 between the blocks 38 and 40. The other end of the rod 39 is a threaded one having screwed thereon two nuts 45, the arrangement being such that the nuts constitute a stop for the slidable block 38 attached to the arm 35A. Thus, each roller element 33 can deflect upwardly under spring action and, during operation, it is pushed against the soil, so that unevennesses in the soil can easily be followed. The adjacent roller elements 33, which are movable in height independently of each other, together constitute a roller, by means of which the soil cultivating machine is also supported during operation. To that end the frame portion 2 can bear on the portion 22 of the arms 20 via pins 46, so that it can deflect upwardly when meeting an obstacle. The pins 46 can be inserted into one of a plurality of apertures 47 provided in supports 48 connected to the rear side of the plates 7. By means of the pins 46, it is possible to adjust the working depth of the soil working members 4. Between the legs of each U-shaped portion 28, an arm 31 is provided with an obliquely downwardly and forwardly extending carrier 48A which at its lower end is fitted with a scraper 49 having near its centre a slot to receive the edge 35 of a roller element 33, while the leading sides of the scraper portions located on either sides of the edge 35 extend to the circumference thereof (Figure 3). The seed drill 25 includes a hopper 50 accommodating a discharge mechanism which may be designed and be driven in a known per se manner. At their leading sides there are arranged between the plates 26, near the upper and lower ends thereof, cross beams 51 which are provided with attachment means 52 and 53, by means of which the seed drill, if employed as the only implement, can be coupled to the three-point lifting hitch of a tractor. The hopper 50 of the seed drill 25 is fitted with downwardly extending seed delivery tubes 54 which end in a seed coulter 55. With the aid of a clamping bolt 56, each seed delivery tube 54 is adjustable in height relative to a bracket-shaped support 57 which is arranged pivotably between the legs of a U-shaped portion 28 by means of a shaft 58. Each support 57 supports an arm 59 which extends obliquely downwardly and rearwardly. The lower end of each arm 59 is provided on both sides with a shaft 60 for two adjacent pressure rollers 61 which, taken in the direction of operative travel A, are arranged relative to each other in the shape of a V.

During travel of the above-described implement in a direction indicated by the arrow A, in which situation the trestle of the soil cultivating machine 1 is connected to the three-point lifting hitch of a tractor via the three-point coupling, the soil working members 4 can be driven from the power take-off shaft via the intermediate shaft and the above-described transmission - adjacent soil working members rotating in opposite directions - and they work at least contiguous strips of soil by means of their tine-like soil working elements 5, after the soil has been loosened effectively by the goosefoot-like soil working members 13 at a depth which substantially corresponds to the working depth of the soil working elements 4. The soil worked thus is slightly compressed by the roller elements 33, while by the edge 35 there is made a furrow in which, because every seed coulter 55 is located directly behind a roller element 33, the seed material is deposited. Thereafter, the furrow thus obtained is closed by means of the V-shaped pressure rollers 61.

The above-described implement is eminently suitable for sowing grains, the spring-loaded support of the assembly by means of the spring-loaded roller elements 33 ensuring an accurate sowing. During operation, the frame portion 2 of the soil cultivating machine 1 can move in height relative to the arms 20, as a result of which a floating support of the machine is obtained.

The above-described seed drill 25 can be detached from the arms 20 after the bolts 24 have been loosened, and be attached for individual use to the three-point lifting hitch of a tractor by means of the coupling means 52, 53. During drilling, a constant sowing depth can be maintained, because the roller elements 33 located before each of the seed coulters 55 can adapt themselves in an excellent manner to prevailing soil unevennesses, so that even in possible wheel tracks the sowing can be effected at the same depth as in the intermediate strip of soil.

The invention is not limited to the features described in the foregoing, but also relates to all the details of the drawings, whether they have been described or not.

## Claims

1. A soil cultivating machine for the purpose of combined working and sowing of soil, comprising soil working elements (4) and a following packer roller constituted by a plurality of roller elements (33) arranged in side-by-side relationship for creating furrows in which the sowing can take place, by locally compressing the worked soil, the machine further comprising a seed drill (25) with seed delivery tubes (54), mounted on or at least supported by the packer roller during operation, a seed delivery tube (54) being arranged behind each roller element (33) for depositing seeds on the precompressed soil in a respective furrow, characterized in that the machine comprises further pressure rollers (61), each operating at least predominantly in the line of a respective furrow and being arranged behind a seed delivery tube (54) and pivotably around a horizontal axis in the machine, by means of an arm (59) carrying said further pressure roller.

2. A soil cultivating machine according to claim 1, characterized in that a further pressure roller (61) is smaller in size than the leading roller element (33), as seen in side view.

3. A soil cultivating machine as claimed in claim 1 or 2, characterized in that means are provided for adjusting the height of a seed delivery tube (54) relative to its support.

4. A soil cultivating machine as claimed in any one of the preceding claims, characterized in that at least the lower part of a seed delivery tube (54) is arranged at least predominantly vertically downwardly and in that a further pressure roller (61) is located immediately behind a predominantly vertically extending seed delivery tube (54), so as to form a compact structure, as seen in side view.

5. A soil cultivating machine as claimed in any one of the preceding claims, characterized in that a support (27) extending predominantly horizontally is arranged behind the packer roller and in front of the further pressure rollers (61) for the support thereof.

6. A soil cultivating machine as claimed in any one of the preceding claims, characterized in that a seed delivery tube (54) at its lower end is provided with a seed coulter, the delivery tube (54) in an adjustable manner being connected to a pivotal arm (59) of a further pressure roller such that the seed coulter (55) can reach downwardly beyond the working level of the pressure roller.

7. A soil cultivating machine (1) as claimed in any one of the preceding claims, characterized in that for a roller element (33) there are present two carrier arms (31, 35A), one (31) of which is arranged capably of pivoting about a pivot shaft (30) and the other (35A) is connected pivotably to a pivotal rod (37), around which the pressure spring (44) is arranged.

8. A soil cultivating machine (1) as claimed in claim 7, characterized in that an arm (31) for a roller element (33), which arm (31) is arranged pivotably by means of the pivot shaft (30), is also provided with a carrier (48A) for a scraper (49).

9. A soil cultivating machine (1) as claimed in any one of the preceding claims, characterized in that a roller element (33) consists of two identical portions (34) and at the circumference is provided near its centre with an outwardly extending edge (35).

10. A soil cultivating machine (1) as claimed in claims 8 and 9, characterized in that, near its centre, the scraper (49) is provided with a recess for receiving the edge (35) on the roller element (33).

11. A soil cultivating machine (1) acclaimed in any one of the preceding claims, characterized in that a further pressure roller consists of two roller parts arranged in the shape of a V and forming a means for dosing the furrow.

12. A soil cultivating machine (1) as claimed in any one of the preceding claims, characterized in that a seed coulter (55) is movable in height together with the V-shaped pressure roller (61).

13. A soil cultivating machine (1) as claimed in any one of the preceding claims, characterized in that, together with the seed coulter (55) and the pressure roller (61), the roller elements (33) constitute part of a seed drill (25) which is connected detachably to the soil cultivating machine (1) and is provided with coupling means for coupling to the three-point lifting hitch of a tractor.

14. A soil cultivating machine (1) as claimed in any one of the preceding claims, characterized in that the seed drill (25) is connected detachably to arms (52), on which arms (52) a frame portion (2) carrying the soil working members (4) of the soil cultivating machine (1) is supported capably of movement in height.

15. A soil cultivating machine (1) as claimed in any one of the preceding claims, characterized in that it includes a plurality of adjacently arranged soil working members (4) which are capable of rotating about upwardly directed shafts (3) and are accommodated in a frame portion (2), which relative to the arms (52) is supported pivotably near its leading side and can be coupled to the three-point lifting hitch of a tractor.
